Europäisches Patentamt

European Patent Office

Office européen des brevets

(19)

(11) Publication number: **0 161 185**

**A2**

(12) **EUROPEAN PATENT APPLICATION**

(21) Application number: **85400831.5**

(22) Date of filing: **26.04.85**

(51) Int. Cl.⁴: **B 29 C 49/22**
**B 29 C 69/00, B 65 D 1/12**

(30) Priority: **27.04.84 JP 85755/84**

(43) Date of publication of application:
**13.11.85 Bulletin 85/46**

(84) Designated Contracting States:
**AT BE CH DE FR GB IT LI NL SE**

(71) Applicant: **NISSEI ASB MACHINE CO., LTD.**
**6100-1, Ohazaminamijo Sakakimachi**
**Hanishina-gun Nagano-ken(JP)**

(72) Inventor: **Aoki, Daiichi c/o NISSEI ASB MACHINE CO., LTD.**
**6100-1, Ohazaminamijo, Sakakimachi**
**Hanishina-gun Nagano-ken(JP)**

(72) Inventor: **Orimoto, Hiroyuki c/o NISSEI ASB MACHINE CO., LTD.**
**6100-1, Ohazaminamijo, Sakakimachi**
**Hanishina-gun Nagano-ken(JP)**

(74) Representative: **Schrimpf, Robert et al,**
**Cabinet Regimbeau 26, Avenue Kléber**
**F-75116 Paris(FR)**

(54) **Multi-layer synthetic resin can body and method for manufacturing the same.**

(57) This invention provides a biaxially oriented multi- layer synthetic resin can body an method for manufacturing the same wherein despite a synthetic resin can body of a multi layer construction which is manufactured by cutting a bottle-like intermediate member (6) obtained by stretch blow molding a bottomed parison (1), the cut resin can be used again as resin material and when an open edge is cut and formed for seaming, an end of each layer is not exposed and peeling between layers is hard to occur, the can body being economical and excellent in durability, gas barrier property and heat resistance.

F I G.2

SPECIFICATION

1. TITLE OF THE INVENTION

MULTI-LAYER SYNTHETIC RESIN CAN BODY AND METHOD FOR MANUFACTURING THE SAME

2. BACKGROUND OF THE INVENTION

(1) Field of the Invention

This invention relates to a multi-layer synthetic resin can body biaxially oriented as a whole from a multi-layer parison having a bottom injection molded, the can body having at least walls constructed in three layers and being capable of seaming a peripheral edge of an opening portion along with a metal cover and method for manufacturing the same.

(2) Description of the Prior Art

Containers formed of thermoplastic resins such as polyethylene terephthalate, vinyl chloride are used for various containers. Particularly, containers obtained by stretch blow molding polyethylene terephthalate have a relatively good gas barrier property because of biaxial orientation and a rigidity and therefore, these containers are being widely used as containers for juice, sake, beer, etc. in addition to carbonated beverages.

However, in containers subjected to stretch blow molding, molding thereof is accomplished while holding a mouth portion of a parison extruded or injection molded, that is, a portion generally called a neck portion or a lip portion, and such a portion being held cannot be stretched thinly. Therefore, the mouth portion of the parison remains extruded or injection molded and is not oriented, which is poor in strength, great in wall-thickness and hard. Because of this, even if a metal cover can be snapped, but when a peripheral edge of an opening portion extended outwardly is subjected to seaming along with a metal cover, cracks occur in the periphery of the opening portion due to the bending stress at that time and the opening portion cannot be closed by seaming.

In view of the foregoing, a biaxially oriented container having an open edge which stretch blow molds an intermediate member having the form of a container from a parison and which can apply seaming to the open edge from the intermediate member was developed by U.S. Patent No. 4,496,064.

In this container, a bottle-like intermediate member whose body has an upper end outwardly extended is stretch blow molded from a bottomed parison of thermoplastic resin injection molded, the intermediate member being cut at the extended portion to form an open edge at the lower side biaxially oriented of at least extended portion.

Closing of a container comprising a biaxially oriented body and bottom is made possible by seaming by the open edge and metal cover.

In the container disclosed as a prior art, since the entire container is formed of a single resin, a portion above the extended portion cut from the intermediate member can be used again as resin material, and even if only the stretch blow molded body and bottom comprise a container, the cut portion will never be material loss. However, where in order to further improve gas barrier properties and heat resistance, other materials different in properties such as resins and glass fibers having the aforesaid performances are added as an intermediate layer into the resin which forms a container to provide at least a three-layer container, a bottomed parison molded to manufacture said container is also naturally formed into a three-layer and the extended portion of the intermediate member is also in the form of a three-layer, resulting in a disadvantage in that the cut extended portion cannot be used again as resin material, different from the case of a single layer, to form a material loss.

Accordingly, as compared with the case of a single layer, a three-layer container capable of providing seaming is expensive, and even if the three-layer container is excellent in gas barrier property and heat resistance over the single layer, it is hard to use as a disposable container.

When the extended portion of the three-layer is cut, a cut surface of each layer is exposed, and peeling between layers occurs in the formed open edge by an external force received by the cut portion. This peeling between layers reduces a fastening force of the open edge and the peripheral edge of the metal cover, and where the content comprises those which produce internal pressure such as carbonated beverages, the seaming is impaired by said internal pressure, as a result of which carbon dioxide gas and liquid gradually leak outside and even if not leaked, they gradually permeate between the layers from the end of the open edge to cause the body to peel, resulting in great deterioration of function as a container as well as external appearance to place the container unusable.

In view of the foregoing, in order to obtain a can-like container of a multi-layer construction and which open portion may be closed by seaming, there is only the method which comprises using an open portion of a multi-layer parison as an open portion of a container without modification and molding an open edge at which an end of an intermediate layer is positioned into the form which can withstand bending stress. Some makers have developed a container capable of providing seaming by such means as described but none of them is commercially available.

It is therefore an object of this invention to provide a biaxially oriented multi-layer synthetic resin can body and method for manufacturing the same wherein despite a synthetic resin can body of a muti-layer construction which is manufactured by cutting a bottle-like intermediate member obtained by stretch blow molding a bottomed parison, the cut resin can be used again as resin material and when an open edge is cut and formed for seaming, an end of each layer is not exposed and peeling between layers is hard to occur, the can body being economical and excellent in durability, gas barrier property and heat resistance.

### 3. SUMMARY OF THE INVENTION

In view of the foregoing, the present inventors have further studied a synthetic resin can body of a multi-layer construction and method for manufacturing the same, and as a consequence found that the aforesaid intermediate member comprising a single layer above said extended portion and at least a three-layer below the extended portion is molded from a bottomed parison, and the intermediate member is cut at the extended portion as mentioned above to solve the above-described problems.

In this synthetic resin can body of a multi-layer construction, a body and a bottom continuous to the body comprise at least a three-layer and an open edge subjected to seaming comprises a signel layer. The three-layer of the body and bottom comprises a resin forming the can body and an intermediate layer poured into the resin, and the resin forming the can body is defined into an inner layer and an outer layer by an intermediate layer poured so that a front end edge is positioned in the vicinity of a boundary between the body and the open edge.

The can body in which the open edge comprises a single layer whereas others comprise a three-layer can be manufactured from a three-layer bottomed parison. In the injection molded multi-layer bottomed parison, the parison bottom and body which forms from the bottom of the intermediate member to the underside of the extended portion are formed into a three-layer, and a neck portion which forms from the open portion to the underside of the extended portion is formed into a single layer.

The body and bottom obtained by stretch blow molding the intermediate member from the multi-layer bottomed parison and cutting the intermediate member at the extended portion to provide a single layer open edge.

Resins used to form the can body include thermoplastic resins capable of providing biaxial orientation such as polyethylene terephthalate, polyvinyl chloride, etc. Materials used to form an intermediate layer include resins excellent in gas barrier properties over the resin forming a can body such as polyamide resin, ethylene vinyl alcohol copolymer (EVOH), a blend of polyester and polyamide resin, and materials excellent in heat resistance over the resin forming a can body such as polycarbonate, plystyrene, a kneaded material of thermoplastic resin and glass fiber.

In this invention, even if an extended portion of an intermediate member stretch blow molded from a bottomed parison is cut off to form an open edge capable of providing seaming fully biaxially oriented along with the body, the cut-off portion can be used again as resin material similarly to the case of a single resin since the extended portion is a single layer. While the resin used as an intermediate member is generally expensive, the intermediate layer is not cut off but all of them are effectively used, thus entailing no material loss.

Moreover, since the open edge is formed by cutting a single layer portion, an end surface of each layer is not exposed by cutting off the extended portion, and an end of each layer is not peeled by external force at the time of cutting. Accordingly, seaming between the metal cover and open edge which will be accomplished later has the strength similar to that of the case of single layer, and breakage due to internal pressure or permeation of gas or liquid into and between layers will not occur.

A wall-thickness of a can body obtained by the present invention can be suitably selected according to contents. A wall-thickness of an intermediate layer can be molded into 10μ to 80μ or more. A wall-thickness of a bottom is preferably formed to be somewhat greater than that of a body for the purpose of preventing deformation. Where internal pressure is applied, the bottom is preferably molded into a pressure resisting construction.

The method of the present invention can be accomplished by using a well known stretch blow molding machine, for example, a moding machine described in U.S. Patent No. 4,105,391 Specification, and with respect to the molding condition, the condition used when a biaxially oriented container is molded can be utilized.

4. BRIEF DESCRIPTION OF THE DRAWINGS

Fig. 1 is a longitudinal sectional view of an injection molded three-layer bottomed parison and neck mold.

Fig. 2 is a longitudinal sectional view of a stretch blow molded intermediate member and neck mold with the intermediate member partly enlarged.

Fig. 3 is a fragmentary sectional view showing a cut place of an extended portion.

Fig. 4 is an enlarged longitudinal sectional view showing a part of the can body with the extended portion cut off.

Fig. 5 is a front view of a synthetic resin can manufactured by applying seaming of a metal cover to the can body.

Figs. 6 and 7 are respectively fragmentary sectional views showing a rolling state of a metal cover and an open edge.


## 5. DESCRIPTION OF THE PREFERRED EMBODIMENTS

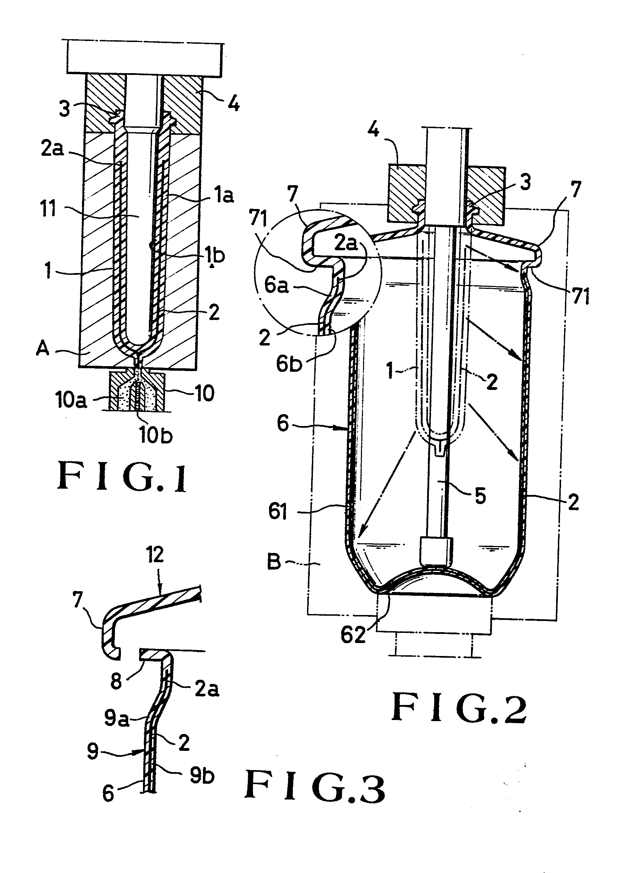

In Fig. 1, a reference numeral 1 designates a bottomed parison, and a parison body is divided by an intermediate layer 2 into an outer layer 1a and an inner layer 1b. The intermediate layer 2 has a front end edge 2a provided while being limited so that it is positioned underside of an extended portion of an intermediate member which will be described later, whereby a neck portion 3 of the bottomed parison comprises a single layer therebelow.

Such a three-layer bottomed parison 1 may be molded by using a well known double nozzle 10 in which two resin passages are disposed in the form of a concentrical circle. Molding is accomplished by injecting resin (for example, polyethylene terephthalate) forming the parison body from an external resin passage 10a into a neck mold 4, a core mold 11 and a cavity of a closed injection mold A and injecting resin (for example, EVOH) forming the intermediate layer 2 from an internal resin passage 10b into the polyethylene terephthalate.

The aforesaid intermediate layer 2 is limited to the lower portion of the neck mold 3 by controlling injection timing of polyethylene terephthalate and EVOH. For example, the polyethylene terephthalate is injected for 1.4 sec. and once stopped to be injected and injection is then switched to EVOH. Again, after 0.1 sec., injection of polyethylene terephthalate is commenced along with injection of EVOH, then a bottomed parison 3 is formed in which the neck portion 4 is a single layer and a body and a bottom are a three-layer. The length of the single layer portion varies with injection time of polyethylene terephthalate first injected, and if the injection time is set to be long, a proportion occupied by the single layer portion increases whereas if it is short conversely, the intermediate layer 2 extends to the neck portion 4.

The bottomed parison after molded is inserted into a blow mold B comprising a pair of divisional molds prepared beforehand while being held by the neck mold 4 and molded into a bolt-like intermediate member 6 as shown in Fig. 2. In this case, if necessary, the bottomed parison 1 is put into a temperature control device, before it is inserted into the blow mold B, for control of parison temperature.

Molding of the intermediate member 6 is accomplished by axial stretching thereof by a stretching rod 5 inserted into the inner bottom surface of the bottomed parison 1 passing through the neck mold 4 and air blown from the periphery of the stretching rod 5 into the bottomed parison to form a three-layer intermediate member 6 which continuously and integrally has a body 61, a bottom 62 and and an extended portion 7 formed at the upper end of the body 61 while expanding further outwardly from the body 61.

By this stretch blow molding, the polyethylene terephthalate forming a parison body is stretched thinly together with the intermediate layer 2 formed of EVOH except for the mouth portion, and the internal and external layers 1a and 1b of the bottomed parison 1 are formed into an external layer 6a and an internal layer 6b of the intermediate member 6. In the intermediate member 6, a portion from a lower side 71 to a mouth portion 3 of the extended portion comprises a single layer of polyethylene terephthalate, and a body 91 and a bottom 92 comprise a three-layer construction of polyethylene terephthalate and EVOH.

The intermediate member 6 is cut at the extended portion 7 after it has been released from the blow mold B. Cutting is accomplished by putting a cutter prepared beforehand into contact with the lower side 71 of the extended portion 7, and the cut intermediate member 6 is divided into two parts, one for an article 12 in the form of a single layer above the extended portion 7 and the other for a can body having, in the outer periphery of the open portion, an open edge 8 in the form of a single layer formed by the lower side 71 of the extended portion.

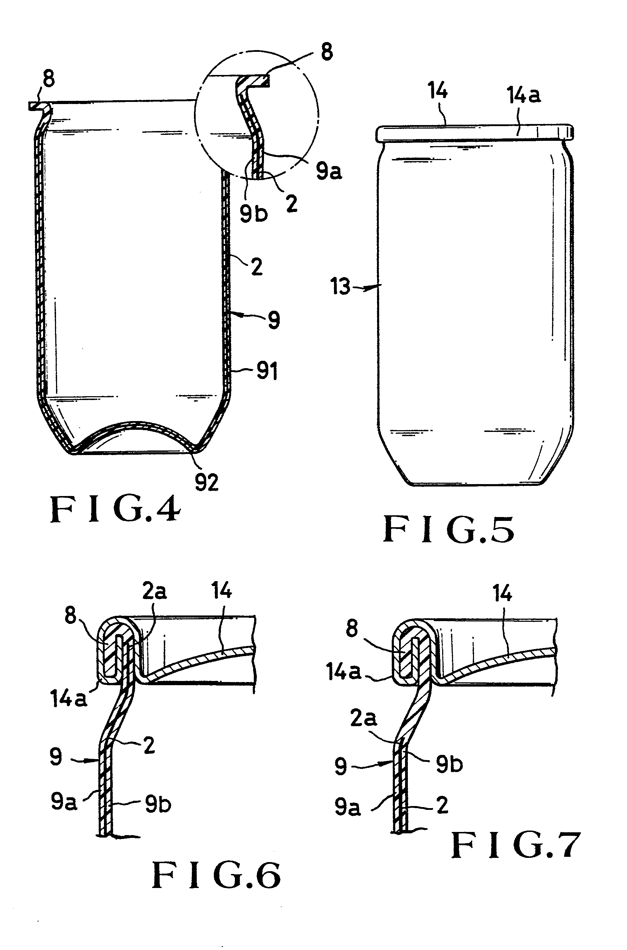

The body 91 and bottom 92 of the can body 9 are formed into a three-layer element provided with an external layer 9a and an internal layer 9b by the intermediate layer 2 positioned to the underside of the open edge 8, and the gas barrier property and heat resistance thereof are improved by the intermediate layer 2. The can body 9 is a body obtained by biaxially orienting a portion from the open edge 8 to the bottom 92, and even if a peripheral edge 14a of a metal cover 14 and the open edge 8 are subjected to seaming into a state shown in Fig. 6 in order that the can body 9 is formed into a can 13 shown in Fig. 5, the open edge 8 sufficiently withstands bending stress at that time and comes into close contact with the peripheral edge 14a without creating any crack to provide positive seaming.

Since seaming is accomplished at a single layer portion subjected to biaxial orientation of the can body 9, bending stress at the time of seaming will not extend over the three-layer portion of the can body 9, and the inner and outer layers 9a, 9b and the intermediate layer are in close contact with each other without giving rise to peeling between layers.

While in the above-described embodiment, the end edge 2a of the intermediate layer 2 is positioned in proximity of the base end of the open edge 8, it will be noted that the intermediate layer 2 can be provided so that the front end edge 2a may be positioned below the seaming portion as shown in Fig. 7. In this manner, even if unevenness occurs in the front end edge 2a depending on the molding condition, a part thereof will not extend over the open edge side.

## CLAIMS

1. A multi-layer synthetic resin can body (9) whose body (91) and bottom (92) are integral and which has an open edge (8) capable of providing seaming at a lower side of an extended portion, said can body being manufactured by molding a bottomed parison (1) formed of thermoplastic resin such as polyethylene terephthalate by injection or extrusion molding, forming said parison into a biaxially oriented bottle-like intermediate member (6) continuously having an extended portion (7) formed by expanding it more outwardly than the body at the upper end of the body using a blow mold and a stretching rod prepared beforehand, and cutting said intermediate member (6) at the lower side (71) of said extended portion, characterized in that the body (91) and bottom (92) comprise at least a three-layer construction comprising an intermediate layer (2) between an internal layer (9b) and an external layer (9a), said intermediate layer (2) having a front end edge (2a) positioned at the underside of said open edge (8), said open edge being constructed merely by the resin which forms said internal layer (9b) and said external layer (9a).

2. A can body according to claim 1, characterized in that said intermediate layer (2) comprises a thermoplastic resin excellent in gas barrier property or heat resistance, or an inorganic material mixed with the thermoplastic resin.

3. A method for manufacturing a multi-layer synthetic resin can body, the method comprising using a double nozzle (10) in which at least two resin passages are disposed in the form of a concentric circle to mold at least a three-layer bottomed parison (1) in which a front end edge (2a) of an intermediate layer (2) is positioned below a neck portion (3), stretch blow molding (B), from the multi-layer bottomed parison, a bottle-like intermediate member (6) in which body and bottom are at least a three-layer and a portion above an extended portion (7) more inflated than said body is a single layer, and cutting off said extended portion (7) of the intermediate member (6) at the lower side (71) to obtain an can body (9) in which an open edge (8) by said lower side (71) is a single layer, and the body (91) and bottom (92) are at least a three-layer construction.

4. A method for manufacturing a can body according to claim 3, characterized in that said intermediate layer (2) comprises a thermoplastic resin excellent in gas barrier property or heat resistance, or an inorganic material mixed with the thermoplastic resin.

FIG.1

FIG.2

FIG.3

**FIG.4**

**FIG.5**

**FIG.6**

**FIG.7**